(19) Europäisches Patentamt
European Patent Office
Office européen des brevets

(11) **EP 2 641 066 B1**

(12) **EUROPÄISCHE PATENTSCHRIFT**

(45) Veröffentlichungstag und Bekanntmachung des Hinweises auf die Patenterteilung:
**13.02.2019 Patentblatt 2019/07**

(21) Anmeldenummer: **11782116.5**

(22) Anmeldetag: **08.11.2011**

(51) Int Cl.:
***G01F 3/10*** *(2006.01)*

(86) Internationale Anmeldenummer:
**PCT/EP2011/069674**

(87) Internationale Veröffentlichungsnummer:
**WO 2012/065883 (24.05.2012 Gazette 2012/21)**

(54) **VOLUMENMESSAUSWERTEVERFAHREN UND -MESSEINRICHTUNG**

METHOD AND MEASURING DEVICE FOR VOLUME MEASUREMENT AND EVALUATION

PROCÉDÉ D'ÉVALUATION ET DISPOSITIF DE MESURE DU VOLUME

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.11.2010 DE 202010015598 U**

(43) Veröffentlichungstag der Anmeldung:
**25.09.2013 Patentblatt 2013/39**

(73) Patentinhaber: **VSE VOLUMENTECHNIK GmbH 58809 Neuenrade (DE)**

(72) Erfinder: **KIRCHERTZ, Jörg 58640 Iserlohn (DE)**

(74) Vertreter: **Einsel, Martin Patentanwälte Einsel & Kollegen Jasperallee 1A 38102 Braunschweig (DE)**

(56) Entgegenhaltungen:
**EP-A2- 0 853 231      WO-A1-2005/119185
WO-A1-2006/131134    DE-A1- 19 703 243
US-A1- 2002 035 441**

EP 2 641 066 B1

**Beschreibung**

Die Erfindung betrifft ein Verfahren zum Messen eines Volumenstromes eines Fluides in einer Vorzugsrichtung durch eine Volumenmesseinrichtung mit einer elektronischen Schaltung und einer Sensoranordnung zur Erfassung einer rotierenden Winkeländerung, bevorzugt ausgebildet als zwei Riesenmagnetowiderstands (GMR)-Sensoren in einer Doppelmessbrücke, wobei die Sensoranordnung ein erstes sinusförmiges Signal, nämlich ein Sinus-Rohsignal und ein zweites sinusförmiges Signal mit identischer Kreisfrequenz $\omega$, das zu dem ersten Signal um 90° phasenverschoben ist, nämlich ein Cosinus-Rohsignal bildet, wobei diese Signale bevorzugt zunächst aufbereitet, interpoliert und/oder digitalisiert werden, und diese interpolierten und/oder digitalisierten Signale in einer Auswerteeinheit, bevorzugt in einer Prozessrechnereinheit mit Quadratur-Encoder-Zähler, verarbeitet und ausgewertet werden, wobei die Auswertung und Verarbeitung die folgenden Schritte aufweist:

    a) Detektieren des Flusses des Fluides;
    b) Bestimmen der Flussrichtung des Fluides.

Ferner betrifft die Erfindung eine Volumenmesseinrichtung zur Durchführung eines derartigen Messverfahrens.
Messungen von Flüssigkeitsmengen und deren Strömungsgeschwindigkeiten werden in einem großen Bereich der Fluid- und Verfahrenstechnik mit Durchfluss- bzw. Volumenmesssystemen, die nach dem Verdrängerprinzip arbeiten, abgedeckt.
Bei diesen Messsystemen sind vor allem die Anforderungen der Messgenauigkeit und der Messdynamik in den jeweiligen Prozessen sehr hoch.
Hierbei handelt es sich insbesondere um Prozesse, bei denen eine Regelung, Überwachung oder Prüfung höchst präzise und schnell durchgeführt werden muss.
Des Weiteren wird oft mit einer Anlage eine Vielfalt von Prozessen (z.B. Flüssigkeiten mit unterschiedlichen physikalischen Eigenschaften) durchgeführt, welches wiederum hohe Ansprüche an die Bandbreite der Einsatzfähigkeit des gesamten Systems stellt.
Die Erfindung soll den zuvor genannten Anforderungen weitestgehend gerecht werden. Hierfür muss zunächst das funktionale Zusammenspiel zwischen den mechanischen und den elektronischen Komponenten im Durchfluss- bzw. Volumenmesssystem genauestens passend ausgewählt sein. Danach liegt die wesentlichste Bedeutung in der Gestaltung der elektronischen Einheit, die entsprechend technisch effizienter, leistungsfähiger und flexibeler ausgestaltet sein soll. Das gesamte Messsystem sowie das dazugehörige Verfahren und die entsprechende Anordnung sollen intelligenter, robuster und anwenderfreundlicher sein als die bisher im Stand der Technik bekannten Lösungen.
Als Grundlage für eine höhere Effizienz ist eine höhere Auflösung notwendig, die durch die WO 2005 / 119 185 A1 bereits generiert werden kann. Hierbei weist ein Durchflussmengenfühler eine Messkammer auf, in die ein Medium zuführbar und wieder abführbar ist, dessen Volumen und/oder Durchflussgeschwindigkeit gemessen werden soll. In der Messkammer befinden sich frei drehbar gelagerte Messwerkelemente. Darüber hinaus ist mindestens ein Sensor zur Messung von magnetischen Feldern und/oder Veränderungen von magnetischen Feldern vorgesehen, außerdem eine Schaltungseinrichtung, der die Ausgangssignale des oder der Sensoren zugeführt werden. Der oder die Sensoren geben ein Ausgangssignal ab und führen es der Schaltungseinrichtung zu. Das Ausgangssignal schwankt periodisch bei jedem Durchlauf eines einzelnen Zahnes und einer zugehörigen Zahnlücke eines der Messwerkelemente zwischen einem Minimalwert und einem Maximalwert. Abhängig von der Stellung des Zahnes relativ zu dem oder den Sensoren nimmt das Ausgangssignal einen reproduzierbaren Zwischenwert an. Die Schaltungseinrichtung ist so aufgebaut, dass sie aus den Ausgangssignalen des oder der Sensoren eigene Ausgangssignale bildet, die die Zwischenwerte in abzählbare Werte umsetzten, die repräsentativ für Teilvolumina der zwischen zwei Zähnen geförderten Volumen stehen.
Verdrängerzähler sind fest in der Flüssigkeitssäule eingespannt und erkennen dadurch jegliche Bewegung im Fluidkreislauf. Dieses ist ein sehr großer Vorteil für die Dynamik des Messsystems.
Jedoch können Systemschwingungen auftreten. Sowohl in Durchflussruhephasen können derartige Schwingungen auftreten oder auch den Betriebsdurchfluss während Durchflussphasen überlagern. Diese Schwingungen werden sodann ebenfalls registriert, wobei sich dies nachteilig auf die Genauigkeit des Gesamtsystems auswirkt. Folglich werden während der Messung auch Impulse vom Messsystem generiert, die von elektronischen Auswertungen fehl interpretiert werden. Diese, in diesem Fall "negative" Empfindlichkeit, wird zusätzlich mit Erhöhung der Auflösung bzw. eines Interpolationsfaktors noch gesteigert. Je nach Stärkegrad der Schwingungen können Fehlsignale in Form von einkanaligen Impulsen oder Impulsfolgen in Durchflussrichtung (Vorzugsrichtung) oder entgegengesetzt zur Betriebsrichtung, erzeugt werden.
Problematisch an den bisher im Stand der Technik bekannten Mess- und Auswerteanordnungen und -verfahren ist die Schwierigkeit der exakten Messung unter Berücksichtigung etwaiger Systemschwingungen sowie störender und schwieriger Prozessbedingungen und dgl.

Zu den störenden und schwierigen Prozessbedingungen gehören beispielsweise die zuvor angesprochenen Schwankungen der Flüssigkeitssäule im Fluidsystem während Durchflussruhephasen, diskontinuierliche Durchflüsse mit Schwankungen in die entgegen gesetzte Durchflussrichtung, eine große Durchflussbandbreite mit hohen Auflösungsansprüchen und Verarbeitungsgrenzen der Auswerteeinheiten sowie erhöhte Ansprüche an die Genauigkeit.

Im Detail sind dies insbesondere die folgenden unerwünschten und zu vermeidenden Ereignisse und deren Ursachen:

Wenn getaktete Systemkomponenten im Fluidkreislauf vorhanden sind, wie z.B. Servoventile mit Dither, oder Vibrationen an Systemteilen anliegen, wie beispielsweise eine Kolbenpumpe im freien Umlauf, entstehen Schwankungen der Flüssigkeitssäule im Fluidsystem während Durchflussruhephasen.

Diskontinuierliche Durchflüsse mit Schwankungen in die entgegengesetzte Durchflussrichtung entstehen z.B. in der Verfahrenstechnik bei einer Mehrkomponentenanlage, in der hochviskose Kleb- oder Dichtstoffe gefördert werden. Die Förderung geschieht z.B. durch Kolbenpumpen, die durch ihre Hubbewegungen auch Durchflüsse entgegengesetzt der Vorzugsrichtung generieren können, z.B. während der Ansaugphase.

Die physikalischen Eigenschaften von Flüssigkeiten sind immer abhängig von den Umgebungseigenschaften. Flüssigkeiten passen sich ihrer Umgebung praktisch an, wodurch sich unterschiedliche physikalische Phänomene ergeben, welche dementsprechend in der Durchflussmessung folglicherweise von großer Bedeutung sind.

Zu den veränderbaren physikalischen Eigenschaften unter bestimmten Einflüssen bzw. Prozessbedingungen gehören insbesondere die Fließeigenschaft, die Fluidität, auch "innere Reibung" genannt, das Verhältnis von Masse zum Volumen der Flüssigkeit, die fast freie Verschiebbarkeit der Flüssigkeitsmoleküle, Reibungen zwischen den Flüssigkeitsoberflächen und den mechanischen Oberflächen, auch "äußere Reibung" genannt, Reibungen zwischen den mechanischen Oberflächen, wie z.B. Lagern, Veränderungen der Abmessungen von den metallischen Systemkomponenten.

Die Prozessbedingungen werden durch die folgenden Faktoren bestimmt:

Druck im Fluidsystem, Temperatur des Fluids und der Umgebung, Durchflussgeschwindigkeiten, Aufbau und Material der mechanischen Systemkomponenten;
Diese ganzen physikalischen Hintergründe wirken sich in der Durchflussmesstechnik unter anderem mit Verdrängerzählern, in irgendeiner Weise auf die Genauigkeit aus.

Die Problemstellung ergibt sich aus der Forderung nach einer erhöhten Genauigkeit. Bei vielen Prozessen werden höchst präzise Messungen verlangt. Die Genauigkeit bei Verdrängerzählern wird insbesondere von den Flüssigkeitseigenschaften unter den prozessbedingten Umgebungen und dem eigentlichen Durchfluss beeinflusst. Das verdrängte Volumen ändert sich geringfügig mit den physikalischen Flüssigkeitseigenschaften unter den jeweiligen Bedingungen wie Druck, Temperatur und der Durchflussgeschwindigkeit, wodurch Abweichungen in den Messungen entstehen.

Bei höchst präzisen Messanforderungen muss der Anwender die Impulswertigkeit der Ausgangssignale für den jeweiligen Durchfluss und den physikalischen Flüssigkeitseigenschaften in seiner Auswertung entsprechend einstellen. Diese Parameter für die jeweiligen Bereiche und entsprechend den physikalischen Flüssigkeitseigenschaften, bzw. das reale verdrängte Volumen unter den Prozessbedingungen werden normalerweise in eine Referenztabelle, eine look-up-Tabelle (kurz: LUT), aufgenommen bzw. hinterlegt, wobei diese in einer nachgeschalteten Auswerteinheit programmiert ist. Mit den Werten aus der look-up-Tabelle und einem Umrechungsalgorithmus wird dann die Auswertung der entsprechenden Impulswertigkeit vorgenommen. Dieses Verfahren bedeutet jedoch einen höheren Aufwand für den Anwender, da dieser meist eine lange Inbetriebnahme durch die Programmierung der Parameter an seiner Auswerteeinheit durchführen muss und insbesondere die Messergebnisse sehr aufwendig nachprozessieren muss, was zu einem wertvollen Zeitverlust und einem erheblichen Mehraufwand führt.

Insbesondere soll die Anpassung der Messung unter Berücksichtigung der zuvor genannten physikalischen Nebenbedingungen bereits in der Messeinrichtung erfolgen und nicht erst im Anschluss in einer Nachprozessierung durchgeführt werden.

Ein weiteres Problem stellt eine gewünschte hohe Bandbreite von zu messenden Volumenströmen dar, nämlich mit einer großen Durchflussbandbreite mit hohen Auflösungsansprüchen und Verarbeitungsgrenzen der Auswerteeinheiten.

In einigen Anlagen kann es möglich sein, dass das Durchfluss- bzw. Volumenmesssystem über dessen gesamten Volumen- bzw. Durchflussmessbereich betrieben werden muss. Oder es ist gar der Fall, dass mit der gleichen Anlage unterschiedliche Durchflussmengen bzw. Geschwindigkeiten in einem Prozess oder mehreren Prozessen gefahren werden müssen.

Zusätzlich möchte der Anwender jedoch so viele Informationen erhalten wie möglich, welches durch die höhere Auflösung des hier beschriebenen Interpolationsverfahrens hergestellt werden kann. Jedoch kann es hierbei problematisch sein, den richtigen Interpolationsfaktor genau einzustellen. Bei den hohen Durchflussmengen bzw. Geschwindigkeiten kann es passieren, dass die Eingangsfrequenz für die nachgeschaltete Auswerteeinheit nicht mehr verarbeitbar ist. Auf der anderen Seite ist die Auflösung bei einem kleineren Interpolationsfaktor und niedrigen Durchflussmengen, bzw. Geschwindigkeiten für den Anwender meist zu gering. Meistens werden mehrere Systemkomponenten, z.B. in Form von zwei umschaltbaren Fluidkreisläufen mit Verdrägerzählern unterschiedlicher Baugröße, zur Lösung dieser Problematik verwendet. Daher soll eine Möglichkeit geschaffen werden, eine hohe Bandbreite von unterschiedlichen Durchflussvolumina mit einer Messanordnung abzudecken.

Der vorliegenden Erfindung liegt die Aufgabe zugrunde, ein Verfahren zum Messen eines Volumenstromes eines Fluides in einer Vorzugsrichtung durch eine Volumenmesseinrichtung anzugeben, das die zuvor genannten Probleme berücksichtigt und insbesondere eine anwenderfreundliche, zeitsparende und genaue, wie auch exakte Messung zulässt. Weiter ist es Aufgabe der Erfindung, eine Volumenmesseinrichtung zur Durchführung eines derartigen Messverfahrens vorzuschlagen.

Diese Aufgaben werden bei einem gattungsgemäßen Verfahren gemäß der Erfindung dadurch gelöst, dass die Auswertung und Verarbeitung folgende weitere Schritte aufweist:
Bestimmen des Zustandes des Fluides durch Vergleichen der zeitlichen Änderung des ersten und/oder des zweiten Signals, nämlich: ein Zustand des Fließens in Vorzugsrichtung liegt vor, wenn ausgehend von einer Nullposition der Volumenmesseinrichtung, das erste Signal vor dem zweiten Signal mit einem Flankenwechsel geändert wird und eine periodische Änderung mit dieser Phasenverschiebung erfolgt; ein Zustand des Zitterns liegt vor, wenn das eine Signal konstant ist und das andere Signal sich ändert, und ein Zustand des Schwingens liegt vor, wenn ausgehend von einer Nullposition der Volumenmesseinrichtung, das zweite Signal vor dem ersten Signal geändert wird und eine periodische Änderung mit dieser Phasenverschiebung mit einer Rückwärtsschwingung erfolgt, und im Anschluss nach dem Ende der Rückwärtsschwingung ausgehend von einer Nullposition der Volumenmesseinrichtung, das erste Signal vor dem zweiten Signal geändert wird und eine periodische Änderung mit einer Vorwärtsschwingung mit dieser Phasenverschiebung erfolgt, und weiterleiten der interpolierten und/oder digitalisierten Signale in Abhängigkeit vom Zustand des Fluides an eine Ausgangsstufe in Form eines Quadratursignals mit Impulsfilterung, nämlich beim Fließen in Vorzugsrichtung: Weiterleitung des ursprünglichen interpolierten und/oder digitalisierten Signals; beim Zittern und/oder beim Schwingen: Ändern des interpolierten und/oder digitalisierten Signals auf ein Grundsignal, also keine Bewegung des Fluids, und Weiterleitung des geänderten interpolierten und/oder digitalisierten Signals, das keinen Durchfluss und somit nur das Grundsignal signalisiert.

Bei einer Volumenmesseinrichtung zur Durchführung dieses Messverfahrens wird diese Aufgabe dadurch gelöst, dass ein programmierbarer Prozessrechner, nämlich ein Mikrocontroller, ein ASIC, ein FPAG und/oder ein DSP mit mindestens einem Quadraturencoderinterface und/oder einem Quadratur-Encoder-Zähler vorgesehen ist, wobei diese Anordnung die Auswertung der Messsignale durchführt.

Durch die Erfindung entsteht ein Verfahren zum Messen eines Volumenstromes mittels eines Quadratursignales, umfassend ein erstes Signal eines ersten Sensors und ein zweites Signal eines zweiten Sensors mit identischer Kreisfrequenz $\omega$, die um 90° zueinander phasenverschoben sind, wobei das Quadratursignal zur Bestimmung des Durchflusses eines Fluides in einer Vorzugsrichtung durch eine Volumenmesseinrichtung mit einer elektronischen Schaltung dient, mittels dessen Bandbreite der Messung erhöht wird, wobei die Messgenauigkeit weiter gesteigert wird.

Durch die Erfindung wird darüber hinaus eine Volumenmesseinrichtung zur Durchführung des Messverfahrens vorgeschlagen, mit einer programmierbaren Prozessrechnereinheit mit mindestens einem Quadraturencoderinterface/ Quadratur-Encoder-Zähler, die ein problemloses Messen eines Volumenstroms ermöglichen.

Der Anwender ist mit dieser Erfindung in der Lage, explizite Einstellungen für die jeweiligen Prozessbedingungen direkt an der Elektronikeinheit durchzuführen. Somit kann er in seinen Messungen Störeinflüsse des Fluidsystems unterbinden, flexibler in der Einsetzbarkeit sein und eine erhöhte Genauigkeit erreichen. Mit der Erfindung entsteht eine integrierte Signalaufbereitungselektronik mit Prozessrechnereinheiten zur Signalkontrolle und Steuerung von Quadraturausgangssignale in Verdrängerzählersystemen. Die Erfindung verfügt insbesondere über folgende Hauptmerkmale bzw. Verbesserungen / Neuerungen: Digitale Signalfilterung, Interpolationsfaktor mit einer Teach- bzw. Anlernfunktion sowie Impulswertigkeitsanpassung.

Die Auswertung und Verarbeitung innerhalb des Verfahren zum Messen eines Volumenstromes eines Fluides in einer Vorzugsrichtung durch eine Volumenmesseinrichtung mit einer elektronischen Schaltung und einem Inkrementalgeber, d.h. einem Sensor zur Erfassung einer rotierenden Winkeländerung, bevorzugt ausgebildet als zwei Riesenmagnetowiderstands (GMR)-Sensoren in einer Doppelmessbrücke, wobei ein erstes sinusförmiges Signal des Inkrementalgebers, nämlich ein Sinus-Rohsignal, und ein zweites sinusförmiges Signal des Inkrementalgebers mit identischer Kreisfrequenz $\omega$, das zu dem ersten Signal um 90° phasenverschoben ist, nämlich einem Cosinus-Rohsignal, wobei diese Signale (S1) bevorzugt zunächst aufbereitet (S1+), interpoliert / digitalisiert (S2) werden, und diese digitalen Signale (S2) in einer Auswerteeinheit, bevorzugt in einer Prozessrechnereinheit mit Quadratur-Encoder-Zähler, verarbeitet und ausgewertet werden, wobei die Auswertung die folgenden Schritte aufweist:

a) Detektieren des Flusses des Fluides;

b) Bestimmen der Flussrichtung des Fluides;

c) Bestimmen des Zustandes des Flusses des Fluides, nämlich Fließen in Vorzugsrichtung, Zittern und /oder Schwingen;

d) Weiterleiten der digitalen Signale (S2) in Abhängigkeit vom Zustand des Fluides an eine Ausgangsstufe (110) in Form eines Quadratursignals mit Impulsfilterung (S3), nämlich:

beim Fließen in Vorzugsrichtung: Weiterleitung des ursprünglichen digitalen Signals (S2);

beim Zittern und/oder beim Schwingen: Ändern des digitalen Signals (S2) auf ein Grundsignal (keine Bewegung des Fluids) und Weiterleitung des geänderten digitalen Signals, das keinen Durchfluss (Grundsignal) signalisiert.

Die Erzeugung des Rohsignals zur Durchflussmessung geschieht über einen Sensor mit zwei GMR-Messbrücken und einem Zahnrad mit ferromagnetischen Anteil. Die GMR-Messbrücken sind über ihre Abstände zueinander im Chip für ein entsprechendes Zahnradmodul bzw. -teilung ausgelegt. Das Modul bzw. die Zahnteilung dieses "Polrades" wird entsprechend zum Sensor ausgelegt. Das magnetische Feld wird von einem Stützmagneten geliefert. Die Zahnstruktur des Polrades moduliert nun das Magnetfeld des Stützmagneten auf den einzelnen GMR-Schichten des Sensors indem sich die Magnetfeldlinien aufgrund ihrer Richtungsänderung verdichten bzw. gestreckt werden. Diese modulierte Feldstärke wird durch den GMR-Effekt in den Messbrücken in ein proportionales elektrisches Signal umgesetzt. Durch die Zahnstruktur wird bei der Messung ein sin / cos Signal generiert. Das gleiche Prinzip kann auch mit einem magnetisiertem Polrad umgesetzt werden.

Schwingungen in Fluidsystemen äußern sich durch ständige Vor- und Rückbewegungen der Flüssigkeitssäule. Da Verdrängerzähler voll in der Flüssigkeitssäule eingespannt sind, wirken sich diese Bewegungen ebenfalls auf deren mechanisches Messwerk aus. Es entstehen ständige Rotationsbewegungen in beide Richtungen. Die Schwingungen des Messwerks werden von dem elektronischen Abtastsystem erfasst und in Impuls- bzw. Flankenfolgen umgewandelt. Diese geben mit ihren Eigenschaften die Bewegung der Flüssigkeitssäule genau wieder, d.h. die generierten Volumenimpulse sind proportional zu den verdrängten Teilvolumina. Somit wird zum einen das schwingende Flüssigkeitsvolumen gemessen, und zum anderen die unterschiedlichen Frequenzen in der Rotationsbewegung des mechanischen Messwerks. Jede Schwingung erzeugt zunächst in der Entstehung einen Richtungswechsel, d.h. die Flüssigkeit bleibt kurzfristig stehen und versetzt dann das Messwerk im Verdrängerzähler in Rotation, entgegengesetzt zur Vorzugsrichtung. Es entsteht also ein kurzfristiger "Rücklauf". Der Richtungswechsel ist in den generierten Quadratursignalen (2 Rechtecksignale, die um 90° phasenverschoben sind) des Interpolators erkennbar. Es folgen zwei Flanken eines Kanals direkt aufeinander ohne jegliche Schalthandlung des anderen Kanals. Dadurch drehen sich die Flankenfolgen, bzw. die 90°-Phase der beiden Kanäle. Die darauffolgenden Schalthandlungen der beiden Kanäle sind abhängig von dem Stärkegrad der Schwingung bzw. von den gemessenen Teilvolumina, welche zusätzlich noch abhängig von dem eingestellten Interpolationsfaktor des Interpolators sind.

Entweder die Flankenfolgen drehen sich sofort wieder, d.h. die nächste Schalthandlung befindet sich wiederum auf dem einen Kanal, oder es werden Impuls- bzw. Flankenfolgen in die entgegensetzte Richtung generiert. Ersteres entsteht bei kleinen Schwingungen, wie z.B. "zittern" der Mechanik bzw. der Flüssigkeitssäule und/oder einem niedrig eingestellten Interpolationsfaktor. Es werden ständige Richtungswechsel detektiert, d.h. es befinden sich Schalthandlungen nur auf einem Kanal. Der zweite Fall tritt eher bei Schwingungen mit größeren Flüssigkeitsvolumenmengen bzw. Rotationswegen und/oder hoch eingestelltem Interpolationsfaktor auf. Hierbei werden Flanken, bzw. Impulsfolgen in die entgegen gesetzte Richtung ausgegeben, bevor wieder der Richtungswechsel in die Vorzugsrichtung bzw. die Bewegung/Rotation in die Ausgangslage stattfindet.

Die Signalfilterfunktion bietet dem Anwender die Möglichkeit Flanken bzw. Impulse während Schwingungsphasen herauszufiltern, damit die Auswerteeinheit die Fehlimpulse nicht falsch interpretiert. Eine nach dem Interpolator geschaltete Prozessrechnereinheit mit einem Quadrature-Encoder-Interface (QEI) übernimmt diese Funktion. Das Quadrature-Encoder-Interface verfügt über eine 4-fach Auswertung, mit der jeder Flankenwechsel der erzeugten Quadratursignale registriert und gezählt wird. Des Weiteren verfügt das Interface über eine Zählrichtungsinformation, die ebenfalls flankengesteuert funktioniert.

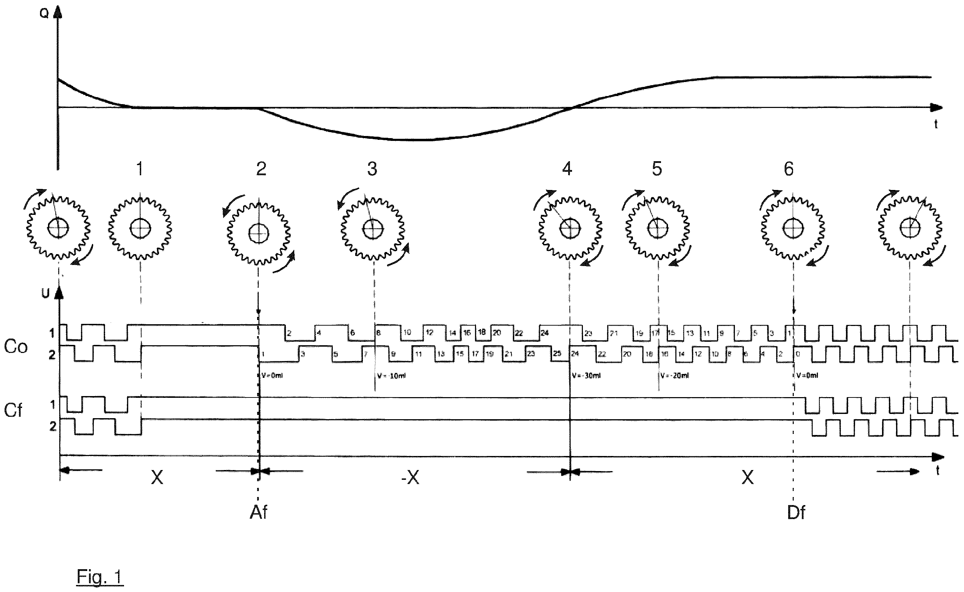

Der Prozessrechner fragt im Betrieb diese Richtungserkennung nach jedem Flankenwechsel ab. Läuft das Durchflussmesssystem im Normalbetrieb bzw. in seiner Vorzugsrichtung, so werden die Zustände der beiden Ausgangskanäle des Interpolators direkt an die Signalausgänge der Elektronik weitergeleitet. Im Falle einer Schwingung wird die Signalfilterung aktiviert. Die Zustände der beiden Kanäle werden bereits während des Richtungswechsels nicht an die Ausgänge weitergeleitet und somit ausgeblendet. Die zugehörige Flanke des Richtungswechsels wird von einem Vorwärts-Rückwärts Zähler des Quadrature-Encoder-Interfaces gezählt. Die darauffolgenden, in der entgegensetzten Richtung generierten Flanken des Interpolators werden wiederum ausgeblendet und in dem integrierten Counter gezählt. Schon während des Wechsels zurück in die Vorzugsrichtung wird der Zählerstand dekrementiert und die darauffolgenden Flanken weiter subtrahiert, bis der Wert 0 im Counter (Ausgleich Schwingung in entgegengesetzter Vorzugsrichtung - Rückschwingung in Vorzugsrichtung) und so auch die Ausgangsposition der Schwingung wieder erreicht ist. Bis dahin werden alle Schalthandlungen der beiden Kanäle nicht an die Signalausgangsschaltung weitergegeben. Die nächsten Flankenwechsel der Kanäle in der Vorzugsrichtung werden dann wieder an die Signalausgänge der Elektronik angebunden. Dieses hat für den Anwender den Vorteil, dass zum einen die Impulse während eines Rücklaufs ausgeblendet werden und zum anderen erst wieder Impulse ausgegeben werden, nachdem die Schwingung oder die Rotation wieder an ihren Ursprung zurückgekehrt ist. Es werden also nicht zu viele und nicht zu wenig Flanken ausgegeben bzw. Teilvolumina gemessen (siehe Figur 1).

Die digitale Signalfilterung kann bei Bedarf entsprechend angepasst werden, so dass die unerwünschten Signale herausgefiltert werden, wobei die Filterrate angepasst werden kann.

Dadurch, dass das Bestimmen des Zustandes des Fluides durch Vergleichen der zeitlichen Änderung des ersten und/oder des zweiten Signals erfolgt, nämlich:

- Zustand des Fließens in Vorzugsrichtung liegt vor, wenn ausgehend von einer Nullposition der Volumenmesseinrichtung, das erste Signal vor dem zweiten Signal geändert (Flankenwechsel) wird und eine periodische Änderung mit dieser Phasenverschiebung erfolgt;
- Zustand des Zitterns liegt vor, wenn das eine Signal konstant ist und das andere Signal sich ändert, und
- Zustand des Schwingens liegt vor, wenn ausgehend von einer Nullposition der Volumenmesseinrichtung, das zweite Signal vor dem ersten Signal geändert wird und eine periodische Änderung mit dieser Phasenverschiebung erfolgt (Rückwärtsschwingung), und im Anschluss (Ende der Rückwärtsschwingung) ausgehend von einer Nullposition der Volumenmesseinrichtung, das erste Signal vor dem zweiten Signal geändert wird und eine periodische Änderung mit dieser Phasenverschiebung erfolgt (Vorwärtsschwingung), kann das Verfahren präzisiert werden, so dass die genaue Identifikation der unerwünschten bzw. geforderten Zustände ermittelbar ist.

Wenn nach der Bestimmung des Zustandes Schwingung oder Zittern zunächst das während der Schwingung oder des Zitterns entgegen der Vorzugsrichtung transportierte Volumen des Fluides mit dem in Vorzugsrichtung transportierten Volumen des Fluides ausgeglichen (Ausgleich der gezählten Impulse) wird, bevor das Bestimmen des Zustand Fließen in Vorzugsrichtung erneut erfolgt, erhält der Anwender eine exakte Information über das effektiv transportierte Fluidvolumen.

Insbesondere werden zur Messung / Detektion und/oder Zustandsbestimmung die Flankenwechsel der Signale in der Auswerteeinheit, bevorzugt einer Prozessrechnereinheit mit Quadratur-Encoder-Zähler, besonders bevorzugt in einem internen Zähler, gezählt und/oder verarbeitet.

Wenn die ausgeblendeten Signale (S2) auf einem weiteren Ausgang und/oder dem selben Ausgang ausgegeben werden, wobei bevorzugt erst ab einem Überschreiten eines Grenzwertes diese Signale (S2) vollständig signalisiert werden, ist der Anwender in der Lage über Schalter einen Grenzwert, bzw. eine limitierte Flankenanzahl für den Counter einzustellen, um Durchflüsse in entgegengesetzter Richtung letztendlich doch festzustellen, falls dieses benötigt wird.

Ein wesentlicher Vorteil der Erfindung ist der weitere Aspekt einer Interpolationsanpassung mit einer Teach- oder auch Anlernfunktion.

Die Interpolation von Messsignalen dient hierbei zur Erhöhung der Auflösung von Messsystemen. Dabei werden die analogen Signale (Rohsignale des Sinus und Cosinus) in gleichmäßige Abschnitte unterteilt und digitalisiert. Die Anzahl der Abschnitte wird als Interpolationsrate bezeichnet. Es gibt unterschiedliche Interpolationsverfahren. Hierzu zählen Interpolation über das Additionstheorem, die Arcustangens-Interpolation oder die Nonius-Interpolation. Die Interpolation die, bei dieser Entwicklung eingesetzt wird, beruht auf dem Arcustangens Interpolationsverfahren.

Bei diesem Verfahren werden das Sinus- und Cosinussignal ständig abgetastet und über A/D-Wandler mit ausreichender Bit-Auflösung digitalisiert. Aus diesen digitalen Signalen kann nun die "Winkelinformation" bzw. die "Position" des Zahnes unter dem GMR-Sensor über die Arcustangens-Funktion ermittelt werden. Bei Betrachtung des Einheitskreises ($\sin^2 + \cos^2 = 1$) und durch die Berechung von $x = \arctan$ (U Sin / U Cos) ergeben sich lineare periodische Teilbereiche innerhalb einer Geberperiode aus denen durch entsprechende digitale Schaltpunkte bzw. Schwellwerte die A - B - Z - Impulssignale mit der erforderlichen Rate generiert werden. Die Schaltpunkte sind Binär-Werte proportional zur Winkelinformation die durch eine Table-Look-Up Tabelle (basierend auf der Bitbreite der ADCs) oder durch einen Funktions-Algorithmus ermittelt werden. Das Z-Signal ist ein Signal das für die absolute Winkelmessung als "Referenzmarke" dient. Es wird einmal während einer Geberperiode generiert (meistens bei 45°). Dieses Signal ist für die Durchflussmessung eigentlich nicht notwendig, wird jedoch hier für die Periodendauermessung zur Interpolationsfaktor-Umschaltung und Durchflussspitzenerkennung ausgenutzt und interpretiert.

Bei einem Verfahren zum Messen eines Volumenstromes mittels eines Quadratursignales, umfassend ein erstes Signal eines ersten Sensors und ein zweites Signal eines zweiten Sensors mit identischer Kreisfrequenz $\omega$, die um 90° zueinander phasenverschoben sind, wobei das Quadratursignal zur Bestimmung des Durchflusses eines Fluides in einer Vorzugsrichtung durch eine Volumenmesseinrichtung mit einer elektronischen Schaltung dient, wird in Abhängigkeit vom Volumenstrom ein Interpolationsfaktor, der für die Auflösung der zu bestimmenden Durchflussmenge des Fluides verwendet wird, angepasst.

Bevorzugt wird der eingestellte und/oder verwendete Interpolationsfaktor separat kommuniziert, wobei die unterschiedlichen Interpolationsfaktoren bevorzugt über unterschiedliche Spannungsniveaus signalisiert werden.

Im Betrieb erkennt ein Prozessrechner über ein eigenständiges Frequenzsignal des Interpolators die Zeitpunkte der Umschaltung, welche dann von diesem eingeleitet werden.

Die nachgeschalteten Auswerteeinheiten können die unterschiedlichen Aktivierungen der Interpolationsfaktoren für die jeweiligen Durchflussbereiche über einen entsprechenden Spannungspegel auf der separaten Signalleitung erkennen. Folgende Spannungspegel werden ausgegeben: IPF1 bei +0V (z.B. GND); IPF2 bei + 2,25V (z.B. $V_0$); IPF3 bei + 3,3V (z.B. VDD); IPF4 bei + 5V (z.B. VDDA).

Mit der Teach- bzw. Anlernfunktion in Bezug auf den Interpolationsfaktor ist es dem Anwender möglich einen Interpolationsfaktor explizit für den jeweiligen Durchflussbereich vorzugeben. Die Umschaltpunkte der Interpolationsfaktoren werden dabei während der Inbetriebnahme einmal angegeben bzw. angelernt und von der Elektronik gespeichert. Im darauffolgenden Normalbetrieb geschieht die Umschaltung der Interpolationsfaktoren automatisch. Über eine separate Signalleitung wird der Status der Interpolationsfaktoren-Aktivierung an die angeschlossene Auswertung übermittelt.

Der Anwender kann die Umschaltung zwischen Interpolationsfaktoren mit den dazugehörigen Signalfiltereinstellungen ("FILT") genau vorgeben. Der Modus für die Interpolationsfaktor-Anlernfunktion wird über eine Einstellung an Kodierschaltern, Steckbrücken und nach der Betätigung eines Tasters aktiviert. Die Aktivierung wird dem Anwender über Meldeeinrichtungen (LEDs und dgl.) an der Elektronik signalisiert. Danach muss der Anwender die Anzahl der Durchflussbereiche mit den unterschiedlichen Interpolationsfaktoren an einem der Kodierschalter einstellen und über die Betätigung des Tasters diese bestätigen. Es sind insbesondere 2 bis 4 Durchflussbereiche mit entsprechenden Interpolationsfaktoren sinnvoll einstellbar.

Danach kann der Anwender bereits im durchflussfreien Zustand der Anlage den ersten Interpolationsfaktor und dazugehörigen FILT festlegen, indem er an den jeweiligen Kodierschaltern den Interpolationsfaktor und FILT einstellt und den Taster betätigt. Die Übernahme und die Bereitschaft zur Programmierung des nächsten Interpolationsfaktors wird ihm wiederum signalisiert. Danach muss der Anwender den Durchfluss einstellen, an dem der nächste Interpolationsfaktor aktiviert werden soll. Während dieser Zeit sind natürlich die Signale an den Ausgängen aktiv, um die Einstellung korrekt durchführen zu können. Ist der entsprechende Durchfluss eingestellt, muss der Anwender den nächsten Interpolationsfaktor und FILT mit den Kodierschaltern einstellen und wiederum die Speicherung über den Taster durchführen.

Bei diesem Einstellverfahren wird bevorzugt zunächst das eigenständige Frequenzsignal von der Elektronikeinheit gemessen und analysiert. Aufgrund der Systemkomponenten in den Fluidkreisläufen wie zum Beispiel Pumpen weisen die Durchflüsse in der Regel keinen konstanten Wert auf, sondern bewegen sich um einen Mittelwert.

Während der Analyse des Durchflusses werden dessen Maximalwerte und Minimalwerte der Durchflussfrequenz ermittelt. Aus diesen Werten wird für den Umschaltpunkt, welcher dem Mittelwert des gemessenen Durchflusses entspricht, eine Schalthysterese festgelegt. Durch diese Schalthysterese wird ein unerwünschtes, ständiges Wechseln der Interpolationsfaktoren im Bereich des Umschaltpunktes vermieden.

Ein Beispiel: Der Wechsel von einem ersten Interpolationsfaktor IPF1 und den zweiten Interpolationsfaktor IPF2 wird erst vorgenommen, wenn der Durchfluss im Bereich des vom Umschaltpunkt gemessenen Maximalwertes liegt. Wobei die Umschaltung vom IPF2 auf den IPF1 erst erfolgt, wenn die Durchflussfrequenz im Bereich des vom Umschaltpunkt, während des Anlernens, gemessenen Minimalwert liegt.

Diese Prozedur wird bei jedem Umschaltpunkt durchgeführt. Nach dem letzten gespeicherten Umschaltpunkt signalisiert die Elektronik dem Anwender, dass die Konfiguration der Teachfunktion beendet ist und aktiviert wurde. Über Änderungen an den Steckbrücken kann die Teachfunktion wieder deaktiviert werden.

Eine weitere Möglichkeit zur Programmierung der Funktion der Interpolationsfaktoren ist die komplette Parametereingabe über die Kodierschalter oder über eine elektronische Schnittstelle. Bei diesem Einstellverfahren werden die Ziffern der einzelnen Parameter, insbesondere also die Anzahl der Interpolationsfaktoren IPF, die Umschaltfrequenz, die Interpolationsfaktoren IPF und die Signalfiltereinstellungen FILT und der Hysterese-Grad (in %), über die Kodierschalter oder eine elektronische Schnittstelle schrittweise programmiert.

Dieses alternative Einstellverfahren kann beispielsweise verwendet werden, wenn es für den Anwender unmöglich ist, während der Inbetriebnahme an dem Vorverstärker die Einstellungen durchzuführen. In diesem Fall kann er die Parametrierung für die Umschaltung der Interpolationsfaktoren schon im Voraus tätigen.

Ein weiterer Aspekt ist die Impulswertigkeitsanpassung.

Beim Verfahren zum Messen eines Volumenstromes mittels eines Quadratursignales, umfassend ein erstes Signal eines ersten Sensors und ein zweites Signal eines zweiten Sensors mit identischer Kreisfrequenz $\omega$, die um 90° zueinander phasenverschoben sind, wobei das Quadratursignal zur Bestimmung des Durchflusses eines Fluides in einer Vorzugsrichtung durch eine Volumenmesseinrichtung mit einer elektronischen Schaltung dient, erfolgt eine Impulswertigkeitsanpassung der Quadratursignale vor Weiterleitung an die Ausgabeeinheit.

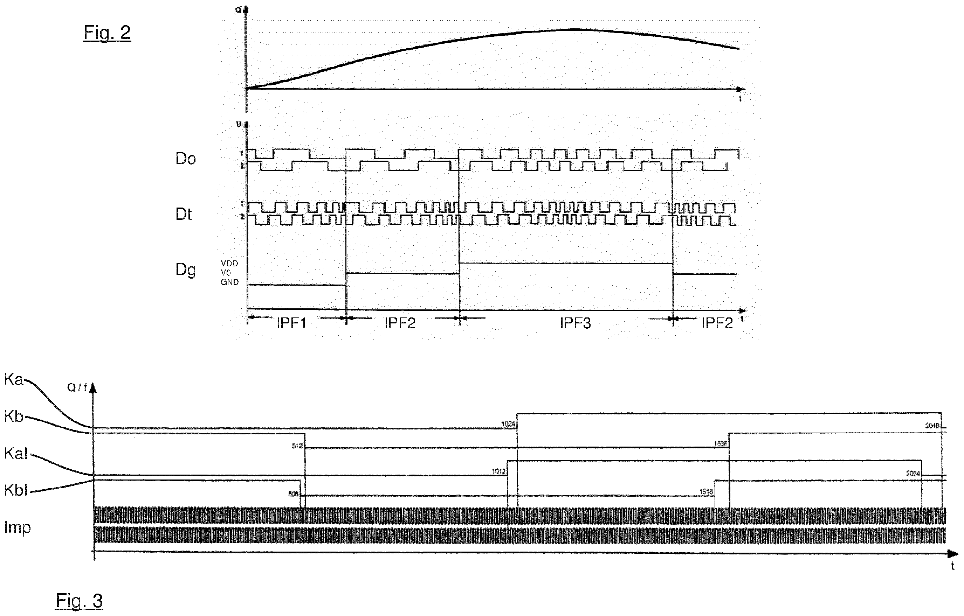

Hierzu wird zur Impulswertigkeitsanpassung auf eine Datenbank mit vordefinierten Prozesswerten, bevorzugt eine look-up-Tabelle, zugegriffen und die Korrekturwerte für die derzeit vorliegenden Prozessbedingungen werden ausgelesen und mittels der Korrekturwerte wird eine Korrektur der Quadratursignale durchgeführt. Hierzu wird insbesondere auf Figur 3 hingewiesen.

Die integrierte Funktion "Impulswertigkeitsanpassung" dieser Elektronik bietet dem Anwender nun Ausgangsimpulse, die direkt über die richtige Wertigkeit bzw. Impulslänge für die entsprechende Prozessbedingung verfügen. Diese Anpassung des "Frequenzgangs" wird auch in der Elektronik durch eine look-up-Tabelle und Umrechnungsalgorithmen durchgeführt. Die Elektronikeinheit benötigt ebenfalls entsprechende Parameter aus den reellen verdrängten Volumina, die unter den jeweiligen Prozessbedingungen herrschen.

Jedoch besteht der große Unterschied zu den im Stand der Technik bekannten Verfahren, dass diese Anpassung bzw. Erhöhung der Genauigkeit schon in der Volumensensorelektronik geschieht und nicht erst in der Auswertung, welche der Kunde nicht mehr zusätzlich programmieren oder kostspieliger erwerben muss. Zudem bietet das dem Anwender ein enormes Potential der Zeiteinsparung.

Es besteht nun die Möglichkeit, die Parameter für die jeweiligen Prozessbedingungen durch eine externe Stelle oder beim Hersteller selber ermitteln zu lassen und in Form von Korrekturparametern in den Speicher der Elektronik zu übertragen. Der Anwender erhält dann ein Gerät, welches schon über die erhöhten Genauigkeitsansprüche für die entsprechende Messung verfügt.

Der höchste Anteil der Abweichungen entsteht in erster Linie durch die Fluidität der Flüssigkeit, der Durchflussgeschwindigkeit, dem Druck und der Temperatur, welche einfach zu reproduzieren sind.

Weiterhin bleibt dem Kunden auch die Möglichkeit, vor Ort an seiner Anlage unter den Prozessbedingungen die Korrekturparameter selbst zu ermitteln (zum Beispiel durch Auslitern auf einer Waage) und mit Hilfe einer PC-Software und einer speziellen Schnittstelle diese in den Speicher der Elektronik zu übertragen. Wenn der Anwender mehrere Auswerteeinheiten betreibt, braucht er diese nicht mehr einzeln anzupassen.

Die Hardware für die Impulswertigkeitssteuerung setzt sich zusammen aus einem hochauflösenden Interpolator und einer oder mehreren Prozessrechnereinheiten. Diese setzten sich zusammen aus zwei Quadraturencoderzählern (gegebenenfalls auch nur einer), einem Zähler mit einer hohen Bitbreite (zum Beispiel 32 - Bit) und einem übergeordneten Prozessrechner zur Steuerung der einzelnen Hardwarekomponenten über Schnittstellenkommunikation (zum Beispiel SPI, I$^2$C, BISS, UART oder CAN).

Vorab muss durch einen Messprozess mit speziellen und hochpräzisen Vergleichsgeräten die Messabweichung unter den jeweiligen Prozessbedingungen im Einsatz festgestellt und dokumentiert werden. Diese Messabweichungen bzw. die reellen Messwerte müssen dann durch Berechnungen über handelsübliche PC-Software oder speziell gestellte PC-Software in Korrekturwerte umgerechnet und in den Elektronikspeicher übertragen werden.

Im späteren Betrieb liest zunächst die Elektronik die aktuelle Frequenz bzw. den Durchflusswert ein. Diese Aufgabe wird mit Hilfe des Zählers hoher Bitbreite durchgeführt. Eine hohe Bitbreite ist Voraussetzung für Frequenzmessungen über eine große Bandbreite. Das Messprinzip beruht auf dem Periodendauer- oder Pulsbreitenmessverfahren. Bei dem Periodendauer- oder Pulsbreitenmessverfahren wird die Impulsbreite von jedem einzelnen Impuls gemessen und hieraus die Frequenz berechnet. Die Impulsbreite und damit die Zeitdauer des Impulses wird bei diesem Messverfahren durch eine hohe und konstante Taktfrequenz ausgemessen. Aus dem Kehrwert der Periodendauer errechnet sich dann die Frequenz. Da die Periodendauer mit einer Taktfrequenz von z.B. 40 MHz (das entspricht einer Auflösung von 0,025 sec) gemessen wird, ist diese Messung selbst bei hohen Frequenzen noch sehr genau. Bei dieser hohen Auflösung lassen sich auch kleine Frequenzänderungen sofort und kontinuierlich erfassen. Daher eignet sich dieses Messverfahren gut für genaue Frequenz- bzw. Durchfluss- und Masseflussmessungen. Das auszuwertende Signal wird vom Interpolator durch das Nullsignal (nicht interpoliertes Signal) bereit gestellt. Aus diesem 32-Bit-Wert wird nun der entsprechende Korrekturwert aus der Look-up-Tabelle ermittelt.

In der Look-up-Tabelle ist eine gewisse Anzahl von Korrekturwerten mit den dazugehörigen Frequenzen bzw. Periodendauern (32-Bit-Wert) aufgetragen. Aus diesen "Stützpunkten" werden durch Interpolationsrechnungen (hier: Annäherung) die entsprechenden Korrekturwerte zwischen den Stützstellen errechnet, d.h. jedem periodisch eingelesen Frequenzwert aus dem 32-Bit-Zähler ist ein entsprechender Korrekturwert aus der Funktion der Stützstellen bestimmbar. Diese Interpolation erfolgt entweder linear, quadratisch oder kubisch.

Die Korrekturwerte geben eine entsprechende Anzahl an Flanken wieder, mit der die eigentliche Impulswertigkeitsanpassung durchgeführt wird. Der Interpolator muss auf eine sehr hohe Stufe, wie zum Beispiel 2048 Flanken pro verdrängtes Volumeninkrement, einstellbar sein. Diese hoch interpolierten Signale werden an die beiden Quadraturencoderzähler weitergeleitet. Diese Zähler arbeiten wiederum im 4-fach Modus zur Flankenauswertung und zählen kontinuierlich parallel die richtungsabhängigen Flankenfolgen der Ausgangssignale.

In jedem der beiden Quadraturencoderzähler sind mindestens zwei Grenzwerte in Form von bestimmten Flankenanzahlen programmierbar. Beim Erreichen der Grenzwerte geben die beiden Zähler entsprechende Impulssignale raus. Diese Signale dienen einer Ausgangsschaltung zur Umschaltung zwischen High und Low. Die Grenzwerte für den ersten Quadraturencoderzähler liegen im Normal bei: ±512 und ±1536 und die Grenzwerte für den zweiten Quadraturencoderzähler sind: ±1024 und ±2048(O).

Es ist ersichtlich, dass es sich hierbei um die vier Standard-Schaltpunkte innerhalb der nicht interpolierten Signalperiode, bzw. eines verdrängten Volumeninkrements handelt. Mit den Korrekturwerten kann man nun die entsprechenden Grenzwerte, bzw. Umschaltpunkte neu bestimmen und so explizit die Impulswertigkeit, bzw. die Frequenz der Ausgangssignale verändern.

Nachfolgend wird anhand eines Beispiels die Anpassung erläutert. Die Eingangsfrequenz beträgt 900 Hz, die Ausgangsfrequenz mit Impulswertigkeitsanpassung beträgt dahingegen 910Hz, wobei dies durch den Korrekturwert von -6 Flanken in positiver Richtung erreicht wird. Zur Berechnung werden die nachfolgenden Formeln herangezogen:

$$T_{out} = \frac{1}{f_{out}} = \left\lceil \left( \frac{1}{f_{in} \cdot 2048} \cdot (Korrekturwert) \right) + \left( \frac{1}{f_{in} \cdot 4} \right) \right\rceil \cdot 4$$

$$T_{out} = \frac{1}{f_{out}} = \left\lceil \left( \frac{1}{900 \cdot 2048} \cdot (-6) \right) + \left( \frac{1}{900 \cdot 4} \right) \right\rceil \cdot 4 = 1,098 ms$$

$$f_{out} = \frac{1}{T_{out}} = 910 Hz$$

Die Schaltpunkte bzw. Grenzwerte der Kanäle liegen bei: 506 und 1518 Flanken und bei 1012 und 2024 Flanken (siehe Abbildung 3). Beide Zähler beginnen mit Erreichen ihres zweiten Grenzwertes einen neuen Zählstart (Zählerstand 0).

Weitere Funktionen sind eine automatische Sensorabgleichfunktion, eine Durchflussspitzenüberwachung, eine Übertemperaturüberwachung, eine Frequenzüberschreitungsüberwachung sowie eine Fehlermeldung bei Sensordefekt oder Abriss.

Die Volumenmesseinrichtung zur Durchführung eines Messverfahrens zur Volumenbestimmung weist einen programmierbaren Prozessrechner, wie einen Mikrocontroller, einen ASIC, einen FPAG und/oder einen DSP mit mindestens einem Quadraturencoderinterface / Quadratur-Encoder-Zähler auf, wobei diese Anordnung die Auswertung der Messsignale durchführt.

Die Einheit aus programmierbarer Prozessrechnereinheit mit mindestens einem Quadraturencoderinterface / Quadratur-Encoder-Zähler zur Verwendung in einer Volumenmesseinrichtung zum Messen eines Volumenstromes ist hardwareseitig von besonderer Bedeutung für die Durchführung einer Volumenstrommessung.

Weitere vorteilhafte Ausgestaltungen können den Figuren entnommen werden. Nachfolgend werden Ausführungsbeispiele der Erfindung anhand der beiliegenden Zeichnungen beschrieben.

Darin zeigen:

**Fig. 1** ein Anwendungsbeispiel des Impulsfilterungsverfahrens an Hand einer vorliegenden Rückwärtsschwingung;

**Fig. 2** ein Beispiel eines über die Zeit veränderbaren Fluidflusses, wobei eine Änderung des Interpolationsfaktors erfolgt;

**Fig. 3** ein Beispiel der Impulswertigkeitsanpassung;

**Fig. 4** eine exemplarische Signalverarbeitung insbesondere für die Funktionen Impulsfilterung sowie Interpolationsfaktor-Funktion;

**Fig. 5** eine exemplarische Schaltung zur Impulsfilterung und zur Interpolationsfaktor-Funktion und

**Fig. 6** eine exemplarische Schaltung zur Impulswertigkeitsanpassung.

Im Weiteren werden für gleiche Elemente die gleichen Bezugszeichen verwendet.

In **Fig. 1** ist ein Anwendungsbeispiel des Impulsfilterungsverfahrens an Hand einer vorliegenden Rückwärtsschwingung dargestellt. Das Messvolumen beträgt 5 ml (4-fach; 1,25 ml pro Inkrement).

Es sind insbesondere die einzelnen Stufen der Schwingung dargestellt, nämlich:

1: Stillstand
Flankenanzahl: 0
Differenzvolumen 0 ml

2: Anfang der Schwingung und Impulsfilteraktivierung; Ausblendung des Signals
Flankenanzahl: 0
Differenzvolumen 0 ml

3: Bewegung des Fluides entgegengesetzt der Vorzugsrichtung
Flankenanzahl: 8
Differenzvolumen 10 ml

4: Wechsel der Schwingung in die Vorzugsrichtung
Flankenanzahl: 24
Differenzvolumen 30 ml

5: Bewegung des Fluides in die Vorzugsrichtung
Flankenanzahl: 16
Differenzvolumen 20 ml

6: Schwingung des Fluides und des transportierten Volumens ausgeglichen; Ende der Impulsfilterung; Das Signal wird wieder ausgegeben.
Flankenanzahl: 0
Differenzvolumen 0 ml

In **Fig. 2** ist ein Beispiel eines über die Zeit t veränderbaren Fluidflusses Q, wobei eine Änderung des Interpolationsfaktors IPF erfolgt, dargestellt.

Hierbei sind die unterschiedlichen Interpolationsfaktoren, nämlich IPF1, IPF2 sowie IPF3 erkennbar und können so mit den entsprechenden Durchflussmengen Q in ltr pro min korreliert werden.

Es erfolgt eine Anpassung der Empfindlichkeit.

Die Signalisierung der anliegenden IPFs wird über eine separate Leitung (Spannung) kommuniziert.

Die **Fig. 3** zeigt ein Beispiel der Impulswertigkeitsanpassung.

In dieser Darstellung wird das weiter oben genannte Beispiel wieder aufgegriffen und grafisch dargestellt.

Die Auflösung der importierten Impulssignale IMP beträgt 2048 Flanken.

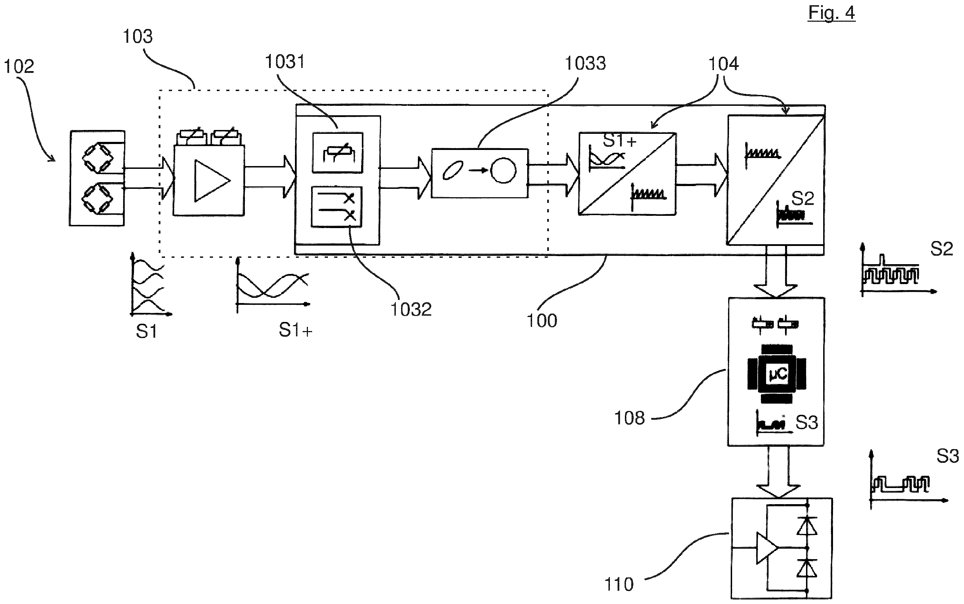

In **Fig. 4** ist eine exemplarische Signalverarbeitung insbesondere für die Funktionen Impulsfilterung sowie Interpolationsfaktor-Funktion dargestellt.

Wie oben beschreiben wird durch die Kombination aus GMR-Sensor, Stützmagneten und dem Polrad ein bzw. die sinus und/oder cosinus-Rohsignale generiert. Diese Rohsignale werden zunächst in mehreren Schritten aufbereitet. Dieses ist notwendig, da für eine exakte Interpolation die trigonometrischen Funktionseigenschaften des Sinus- und des Cosinussignals gegeben und identisch sein müssen. Die Signalaufbereitung beinhaltet hierzu insbesondere die folgenden Stufen, nämlich Verstärkung, Offsetkorrektur, Phasenkorrektur, Rauschdämpfung und/oder Signalregelung.

In der Verstärkerstufe werden die Amplituden der Rohsignale auf einen für den Interpolator verarbeitbare Größe verstärkt. Durch die mechanischen und physikalischen Toleranzen sind die sinusförmigen Signale mit einem Gleichanteil (Offset) behaftet. Über digitale Potentiometer werden diese "Offsets" abgeglichen. In der Schaltung geschieht dieses entweder vor der Verstärkung oder an den Eingängen des Interpolators (vorhandene Schaltungen). Der Offsetabgleich wird bei den vorhandenen Schaltungen über einen speziellen Modus des Interpolators in Verbindung mit einer Periodendauermessung des Mikrocontrollers μC automatisch per Tastendruck durchgeführt.

Die weiteren Stufen werden in den vorhandenen Schaltungen der Entwicklung durch Funktionen innerhalb des Interpolators übernommen. Dieses kann aber auch durch andere Hardwareaufbauten realisiert werden.

Durch die Phasenoffsetkorrektur wird der 90°-Versatz, der ebenfalls die für die korrekte Interpolation notwendig ist, hergestellt. Überlagerte Rauscheffekte auf den sinusförmigen Signalen werden danach über Tiefpassfilter gedämpft.

Die Signalregelung gewährleistet eine gewissen Toleranzbereich bei Offset- und Amplitudenschwankungen des sin / cos Signals. Hierbei werden wiederum ADCs eingesetzt.

Bei der Erfindung befindet sich eine Verstärkungs- und Offsetregelung intern im Interpolator. Danach werden die Signale mit dem oben beschriebenen Interpolierungsmethoden hochauflösend digitalisiert.

Die weitere Verarbeitung der ABZ-Impulssignalen werden durch den entsprechenden Prozessrechner (hier ein Mikrocontroller) durchgeführt. Der Mikrocontroller übernimmt die Kontroll- und Auswerteeinheit des Systems.

Durch die Fähigkeit der Quadraturencodereingänge, Flanken zu zählen und Richtungswechsel sehr schnell zu detektieren, ist die zu patentierende Impulsfilterung vor der endgültigen Ausgabe über die Ausgangsstufe durchführbar.

Mit den Codierschalter hat der Anwender die Möglichkeit die entsprechenden Einstellungen: Interpolationsfaktor, Grad der Filterung, Vorzugsrichtung, Baugröße, automatischer Offsetabgleich und weitere Features durchzuführen.

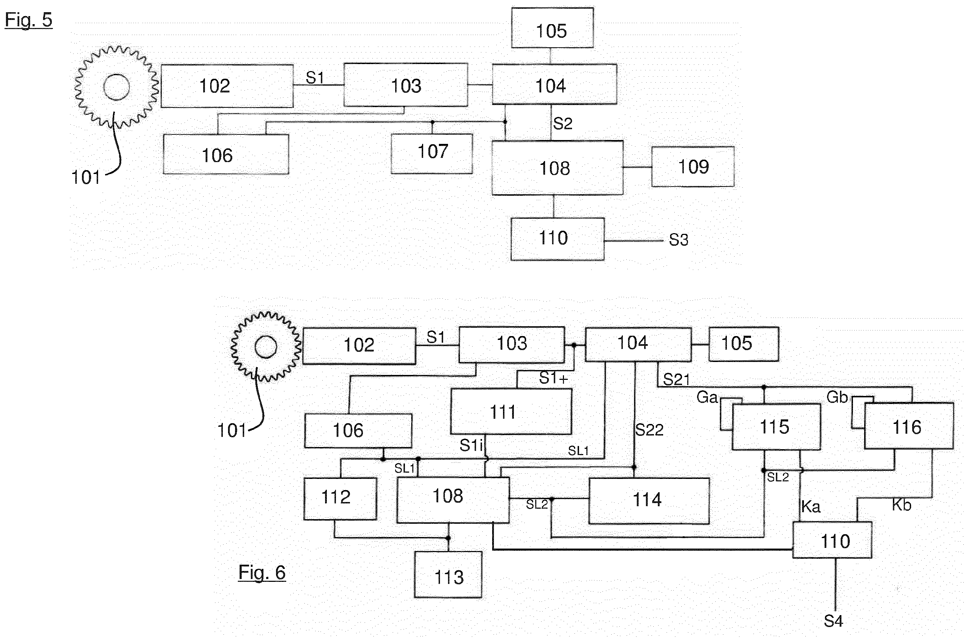

Die **Fig. 5** zeigt eine exemplarische Schaltung zur Impulsfilterung und zur Interpolationsfaktor-Funktion.

In dieser Darstellung sind die einzelnen Komponenten der Schaltung für Impulsfilterung und Interpolationsfaktor-Funktion näher dargestellt.

Die **Fig. 6** zeigt eine exemplarische Schaltung zur Impulswertigkeitsanpassung.

Die Signalgenerierung,- Aufbereitung und -Interpolation ist identisch zu einer Schaltung für die Impulsfilterung und/oder die Interpolationsfaktor-Funktion.

Das aufbereitete Signal wird unter anderem über eine Schmittriggerschaltung digitalisiert. Diese Ausgangsimpulse haben die normale 1-fach Auflösung, d.h. ein Impuls pro Zahn. Diese A/B - Impulse werden über ein Quadraturencoderinterface des Prozessrechners für die Impulsfilterung verwendet, damit Störungen durch Systemschwingungen nicht in den Prozess der Wertigkeitsanpassung einfließen.

Die Ausgänge werden in diesem Fall "gesperrt". Das Z-Signal des Interpolators spiegelt ebenfalls die vereinfachte Frequenz wieder. Diese wird über den 32-Bit-Zähler mit dem Periodendauermessverfahren kontinuierlich gemessen. Der Messwert wird von dem Prozessrechner (hier DSP-Controller) ausgewertet und die entsprechenden Stützstellen des jeweiligen Abweichungsbereiches aus der Look-Up-Tabelle geholt. Die Look-Up-Tabelle enthält proportionale Zählerwerte zu den Abweichungen aus dem Kalibrierprotokoll des Volumenmeters.

Mit diesen Werten wird über eine Annährungsrechnung bzw. über entsprechende Algorithmen im Prozessrechner (hier auch Interpolation genannt), die Grenzwerte (Counterwerte) zur Impulswertigkeitskorrektur für die beiden Quadraturencoderzähler ermittelt und an diese gesendet.

Die hoch aufgelösten A/B-Signale des Interpolators werden ständig von den Quadraturencoderzählern erfasst und gezählt. Diese geben bei jeder Grenzwerterfassung ein Signal an die Ausgangsschaltung weiter und setzten sich durch eine Rückkopplung selbständig zurück. Die Kanäle der Ausgangsstufe wechseln bei jedem Signal der Quadraturencoderzähler, so dass ein Quadraturencodersignal A/B mit einer Periodenlänge abhängig von den Grenzwerten bzw. der Annäherungsrechnung entsteht. Die Wertigkeit des Impulses wird auf das richtige Niveau angepasst (1-fache Auflösung).

Die dargestellten Ausführungsbeispiele sind nicht abschließend zu sehen, sondern stellen lediglich mögliche Ausführungsbeispiele der erfindungsgemäßen Volumenmessauswerteverfahren und -messeinrichtungen dar.

**Bezugszeichenliste**

| | |
|---|---|
| 100 | Interpolationseinheit |
| 101 | Polrad |
| 102 | Riesenmagnetowiderstand (GMR) - Sensor mit Doppelmessbrücke |
| 103 | Signalaufbereitung (Verstärkung und Offsetabgleich) |
| 1031 | Phase |
| 1032 | Tiefpass |
| 1033 | Signalregelung (Gain+Offset) |
| 104 | Interpolator |
| 105 | erster EEPROM |
| 106 | Digitale Potentiometer |
| 107 | zweiter EEPROM |
| 108 | Prozessrechnereinheit mit Quadratur-Encoder-Zähler (QEI) [µC] |
| 109 | Codierschalter |
| 110 | Ausgangsstufe |
| 111 | Schmitt-Triggerschaltung Impulsvereinfachung |
| 112 | EEPROM für Konfiguration (Config) und Look-up-table (LUT) |
| 113 | Systemtakt |
| 114 | 32-bit - Zähler für Periodendauermessung |
| 115 | ABZ-Quadrature Counter 1 |
| 116 | ABZ-Quadrature Counter 2 |
| | |
| S1 | sin / cos - Rohsignale |
| S1 + | aufbereitete sin / cos - Signale |

S1i    Impuls-Signale 1-fach
S2     ABZ-Signale (Impulssignale aus Interpolation)
S21    hochaufgelöstes AB-Signal
S22    Z-Signal
S3     Quadratursignale mit Impulsfilterung
S4     A/B-Signale mit Wertigkeitsanpassung

SL1    Bus 1
SL2    Bus 2
Ga     Grenzwert A
Gb     Grenzwert B
Ka     Kanal A
KaI     Kanal A mit Impulswertigkeitsanpassung
Kb     Kanal B
KbI     Kanal B mit Impulswertigkeitsanpassung
Imp    importierte Impulssignale

X      bevorzugte Transportrichtung
-X     entgegengesetzte Transportrichtung (Rücklauf)

Co     Ausgabesignal ohne Filterung
Cf     Ausgabesignal mit Filterung
Af     Aktivierung der Filterfunktion
Df     Deaktivierung der Filterfunktion

IPF1   Interpolationsfaktor 1
IPF2   Interpolationsfaktor 2
IPF3   Interpolationsfaktor 3

Dg     Signalausgabe der Steuerleitung
Do     Signalausgabe ohne Teachfunktion
Dt     Signalausgabe mit Teachfunktion

Q      Durchflussmenge (l/min)
U      Spannung
t      Zeit

**Patentansprüche**

**1.** Verfahren zum Messen eines Volumenstromes (Q) eines Fluides in einer Vorzugsrichtung durch eine Volumenmesseinrichtung

    - mit einer elektronischen Schaltung und
    - einer Sensoranordnung (102) zur Erfassung einer rotierenden Winkeländerung, bevorzugt ausgebildet als zwei Riesenmagnetowiderstands (GMR)-Sensoren in einer Doppelmessbrücke (102), wobei die Sensoranordnung (102)
    - ein erstes sinusförmiges Signal, nämlich ein Sinus-Rohsignal, und
    - ein zweites sinusförmiges Signal mit identischer Kreisfrequenz $\omega$, das zu dem ersten Signal um 90° phasenverschoben ist, nämlich ein Cosinus-Rohsignal bildet, wobei diese Signale (S1)
    - bevorzugt zunächst aufbereitet (103, S1+),
    - interpoliert und/oder digitalisiert (104, S2) werden, und
    - diese interpolierten und/oder digitalisierten Signale (S2) in einer Auswerteeinheit, bevorzugt in einer Prozessrechnereinheit mit Quadratur-Encoder-Zähler (108), verarbeitet und ausgewertet werden,

wobei
die Auswertung und Verarbeitung die folgenden Schritte aufweist:

a) Detektieren des Flusses des Fluides;
b) Bestimmen der Flussrichtung des Fluides;

**dadurch gekennzeichnet,**
**dass** die Auswertung und Verarbeitung folgende weitere Schritte aufweist:

c) Bestimmen des Zustandes des Fluides durch Vergleichen der zeitlichen Änderung des ersten und/oder des zweiten interpolierten und/oder digitalisierten Signals, nämlich:

- ein Zustand des Fließens in Vorzugsrichtung liegt vor, wenn ausgehend von einer Nullposition der Volumenmesseinrichtung, das erste Signal vor dem zweiten Signal mit einem Flankenwechsel geändert wird und eine periodische Änderung mit dieser Phasenverschiebung erfolgt;
- ein Zustand des Zitterns liegt vor, wenn das eine Signal konstant ist und das andere Signal sich ändert, und
- ein Zustand des Schwingens liegt vor, wenn ausgehend von einer Nullposition der Volumenmesseinrichtung, das zweite Signal vor dem ersten Signal geändert wird und eine periodische Änderung mit dieser Phasenverschiebung mit einer Rückwärtsschwingung erfolgt, und im Anschluss nach dem Ende der Rückwärtsschwingung ausgehend von einer Nullposition der Volumenmesseinrichtung, das erste Signal vor dem zweiten Signal geändert wird und eine periodische Änderung mit einer Vorwärtsschwingung mit dieser Phasenverschiebung erfolgt;

d) Weiterleiten der interpolierten und/oder digitalisierten Signale (S2) in Abhängigkeit vom Zustand des Fluides an eine Ausgangsstufe (110) in Form eines Quadratursignals mit Impulsfilterung (S3), nämlich:

- beim Fließen in Vorzugsrichtung: Weiterleitung des ursprünglichen interpolierten und/oder digitalisierten Signals (S2);
- beim Zittern und/oder beim Schwingen: Ändern des interpolierten und/oder digitalisierten Signals (S2) auf ein Grundsignal, also keine Bewegung des Fluids, und Weiterleitung des geänderten interpolierten und/oder digitalisierten Signals, das keinen Durchfluss und somit nur das Grundsignal signalisiert.

2. Verfahren nach Anspruch 1,
**dadurch gekennzeichnet,**
**dass** nach der Bestimmung des Zustandes Schwingung oder Zittern zunächst das während der Schwingung oder des Zitterns entgegen der Vorzugsrichtung transportierte Volumen des Fluides mit dem in Vorzugsrichtung transportierten Volumen des Fluides mittels Ausgleich der gezählten Impulse ausgeglichen wird, bevor das Bestimmen des Zustands Fließen in Vorzugsrichtung erneut erfolgt.

3. Verfahren nach einem der Ansprüche 1 oder 2,
**dadurch gekennzeichnet,**
**dass** zur Messung und/oder Detektion und/oder Zustandsbestimmung die Flankenwechsel der Signale (S2) in der Auswerteeinheit, bevorzugt einer Prozessrechnereinheit mit Quadratur-Encoder-Zähler (108), besonders bevorzugt in einem internen Zähler, gezählt und/oder verarbeitet werden.

4. Verfahren nach einem der Ansprüche 1 bis 3,
**dadurch gekennzeichnet,**
**dass** die ausgeblendeten Signale (S2) auf einem weiteren Ausgang ausgegeben werden, wobei bevorzugt erst ab einem Überschreiten eines Grenzwertes diese Signale (S2) vollständig signalisiert werden.

5. Verfahren nach einem der Ansprüche 1 bis 4,
**dadurch gekennzeichnet,**
**dass** in Abhängigkeit vom Volumenstrom (Q) ein Interpolationsfaktor (IPF1, IPF2, IPF3), der für die Auflösung der zu bestimmenden Durchflussmenge (Q) des Fluides verwendet wird, angepasst wird.

6. Verfahren nach Anspruch 5,
**dadurch gekennzeichnet,**
**dass** der eingestellte und/oder verwendete Interpolationsfaktor (IPF1, IPF2, IPF3) separat kommuniziert wird, wobei die unterschiedlichen Interpolationsfaktoren (IPF1, IPF2, IPF3) bevorzugt über unterschiedliche Spannungsniveaus signalisiert werden.

**7.** Verfahren nach einem der vorangehenden Ansprüche,
**dadurch gekennzeichnet,**
**dass** eine Impulswertigkeitsanpassung (S4) der Quadratursignale vor Weiterleitung an die Ausgabeeinheit (110) erfolgt.

**8.** Verfahren nach Anspruch 7,
**dadurch gekennzeichnet,**
**dass** zur Impulswertigkeitsanpassung auf eine Datenbank mit vordefinierten Prozesswerten, bevorzugt eine look-up-Tabelle, zugegriffen wird und die Korrekturwerte für die derzeit vorliegenden Prozessbedingungen ausgelesen werden und mittels der Korrekturwerte eine Korrektur der Quadratursignale durchgeführt wird.

**9.** Volumenmesseinrichtung zur Durchführung des Messverfahrens nach einem der vorangehenden Ansprüche,
**dadurch gekennzeichnet,**
**dass** ein programmierbarer Prozessrechner, nämlich ein Mikrocontroller, ein ASIC, ein FPAG und/oder ein DSP mit mindestens einem Quadraturencoderinterface und/oder einem Quadratur-Encoder-Zähler (108) vorgesehen ist, wobei diese Anordnung die Auswertung der Messsignale durchführt.

**Claims**

**1.** Method for measuring a volume flow (Q) of a fluid in a preferential direction by means of a volume measuring device

- having an electronic circuit and
- a sensor arrangement (102) for detecting a rotational angular change, preferably configured as two giant magnetoresistance (GMR) sensors in a double bridge (102), whereby the sensor arrangement (102) forms
- a first sinusoidal signal, specifically a raw sine signal, and
- a second sinusoidal signal with an identical angular frequency $\omega$, which is phase-shifted by 90° relative to the first signal, specifically a raw cosine signal, whereby these signals (S1)
- are preferably initially conditioned (103, S1+),
- are interpolated and/or digitised (104, S2), and
- these interpolated and/or digitised signals (S2) are processed and evaluated in an evaluation unit, preferably in a process computer unit having a quadrature encoder counter (108),

whereby
the evaluation and processing comprises the following steps:

a) detecting the flow of the fluid;
b) determining the direction of flow of the fluid;

**characterised in that**
the evaluation and processing comprises the following further steps:

c) determining the state of the fluid by comparison of the temporal change of the first and/or the second interpolated and/or digitised signal, specifically:

- a state of flow in the preferential direction exists if, starting from a zero position of the volume measuring device, the first signal is changed with an edge change before the second signal and a periodic change takes place with this phase shift;
- a state of jitter exists if one signal is constant and the other signal changes, and
- a state of oscillation exists if, starting from a zero position of the volume measuring device, the second signal is changed before the first signal and a periodic change with this phase shift takes place with a backward oscillation, and subsequently after the end of the backward oscillation, proceeding from a zero position of the volume measuring device, the first signal is changed before the second signal and a periodic change takes place with a forward oscillation with this phase shift;

d) passing on the interpolated and/or digitised signals (S2), dependent upon the state of the fluid, to an output stage (110) in the form of a quadrature signal with pulse filtering (S3), specifically:

- in the case of flow in the preferential direction: passing on the original interpolated and/or digitised signal (S2);
- in the case of jitter and or during oscillation: changing the interpolated and/or digitised signal (S2) to a base signal, that is, no movement of the fluid, and passing on the changed interpolated and/or digitised signal which indicates no flow and thus only the base signal.

**2.** Method according to claim 1,
**characterised in that**
following the determination of the oscillation or jitter state, firstly the volume of the fluid transported contrary to the preferential direction during the oscillation or the jitter is offset against the volume of fluid transported in the preferential direction, by offsetting the counted pulses, before the determination of the flow state takes place again in the preferential direction.

**3.** Method according to one of the claims 1 or 2,
**characterised in that**
for measuring and/or detecting and/or state determination, the edge changes of the signals (S2) are counted and/or processed in the evaluation unit, preferably of a process computer unit having a quadrature encoder counter (108), particularly preferably in an internal counter.

**4.** Method according to one of the claims 1 to 3,
**characterised in that**
the suppressed out signals (S2) are output at a further output, whereby preferably these signals (S2) are fully signalled only from a point of exceeding a threshold value.

**5.** Method according to one of the claims 1 to 4,
**characterised in that**
dependent upon the volume flow (Q), there is adjusted an interpolation factor (IPF1, IPF2, IPF3) that is used for the resolution of the flow quantity (Q) to be determined of the fluid.

**6.** Method according to claim 5,
**characterised in that**
the interpolation factor (IPF1, IPF2, IPF3) that is set and/or used is communicated separately, whereby the different interpolation factors (IPF1, IPF2, IPF3) are preferably signalled by means of different voltage levels.

**7.** Method according to one of the preceding claims,
**characterised in that**
a pulse value adaptation (S4) of the quadrature signals takes place before passing on to the output unit (110).

**8.** Method according to claim 7,
**characterised in that**
for the pulse value adaptation there is accessed a database with pre-defined process values, preferably a look-up table, and the correction values for the process conditions existing at the current time are read out and, by means of the correction values, a correction of the quadrature signals is carried out.

**9.** Volume measuring device for carrying out the measuring method according to one of the preceding claims,
**characterised in that**
a programmable process computer, specifically a microcontroller, an ASIC, an FPAG and/or a DSP comprising at least one quadrature encoder interface and/or one quadrature encoder counter (108) is provided, whereby this arrangement carries out the evaluation of the measurement signals.

**Revendications**

**1.** Procédé servant à mesurer un flux volumique (Q) d'un fluide dans une direction préférentielle par un dispositif de mesure du volume

- avec un circuit électronique et
- un ensemble de capteurs (102) servant à détecter une variation de l'angle de rotation, de manière préférée réalisé sous la forme de deux capteurs à magnétorésistance géante (GMR) dans un double pont de mesure (102), dans lequel l'ensemble de capteurs (102) forme
- un premier signal sinusoïdal, à savoir un signal sinusoïdal brut et
- un deuxième signal sinusoïdal avec une fréquence angulaire identique $\omega$, qui est décalé en phase de 90° par rapport au premier signal, à savoir un signal cosinusoïdal brut, dans lequel lesdits signaux (S1)
- sont, de manière préférée, dans un premier temps, préparés (103, S1+),
- sont interpolés et/ou numérisés (104, S2), et
- lesdits signaux interpolés et/ou numérisés (S2) sont traités et évalués dans une unité d'évaluation, de manière préférée dans un calculateur de processus avec un compteur encodeur en quadrature (108),

dans lequel
l'évaluation et le traitement comportent les étapes suivantes :

a) la détection du flux du fluide ;
b) la définition de la direction de flux du fluide ;

**caractérisé en ce**
**que** l'évaluation et le traitement présentent des étapes supplémentaires suivantes :

c) la définition de l'état du fluide par la comparaison de la modification dans le temps du premier et/ou du deuxième signal interpolé et/ou numérisé, à savoir :

- un état de l'écoulement dans la direction préférentielle est de mise quand en partant d'une position nulle du dispositif de mesure du volume, le premier signal est modifié avant le deuxième signal avec un changement de front et une modification périodique est effectuée avec ledit décalage de phase ;
- un état de frémissement est de mise quand un signal est constant et que l'autre signal varie, et
- un état de l'oscillation est de mise quand en partant d'une position nulle du dispositif de mesure du volume, le deuxième signal est modifié avant le premier signa et une modification périodique est effectuée avec ledit décalage de phase avec une oscillation arrière et directement à l'issue de l'oscillation arrière en partant d'une position nulle du dispositif de mesure du volume, le premier signal est modifié avant le deuxième signal et une modification périodique est effectuée avec une oscillation avant avec ledit décalage de phase :

d) le transfert des signaux interpolés et/ou numérisés (S2) en fonction de l'état du fluide à une phase de départ (110) sous la forme d'un signal de quadrature avec filtrage d'impulsions (S3), à savoir :

- lors de l'écoulement dans la direction préférentielle : le transfert du signal d'origine interpolé et/ou numérisé (S2) ;
- lors du frémissement et/ou lors de l'oscillation : la modification du signal interpolé et/ou numérisé (S2) sur un signal de base, donc aucun déplacement du fluide, et le transfert du signal interpolé et/ou numérisé modifié, qui ne signale aucun flux passant et ainsi signale seulement le signal de base.

2. Procédé selon la revendication 1,
**caractérisé en ce**
**qu'**après la définition de l'état oscillation ou frémissement, dans un premier temps le volume, transporté pendant l'oscillation ou le frémissement dans le sens opposé à la direction préférentielle, du fluide est comparé au volume, transporté dans la direction préférentielle, du fluide au moyen d'une compensation des impulsions comptées, avant que la définition de l'état écoulement dans la direction préférentielle n'ait lieu à nouveau.

3. Procédé selon l'une quelconque des revendications 1 ou 2,
**caractérisé en ce**
**que** pour la mesure et/ou la détection et/ou la définition d'état, les changements de front des signaux (S2) sont comptés et/ou traités dans l'unité d'évaluation, de manière préférée dans un calculateur de processus avec un compteur encodeur en quadrature (108), de manière particulièrement préférée dans un compteur interne.

4. Procédé selon l'une quelconque des revendications 1 à 3,

**caractérisé en ce**

**que** les signaux (S2) masqués sont envoyés sur une autre sortie, dans lequel de manière préférée lesdits signaux (S2) sont signalés en totalité de manière préférée seulement à partir d'un dépassement d'une valeur limite.

5. Procédé selon l'une quelconque des revendications 1 à 4,
**caractérisé en ce**
**qu'**un facteur d'interpolation (IPF1, IPF2, IPF3), qui est utilisé pour la résolution du débit (Q) à définir du fluide, est adapté en fonction du flux volumique (Q).

6. Procédé selon la revendication 5,
**caractérisé en ce**
**que** le facteur d'interpolation (IPF1, IPF2, IPF3) réglé et/ou utilisé est communiqué séparément, dans lequel les différents facteurs d'interpolation (IPF1, IPF2, IPF3) sont signalés de manière préférée par l'intermédiaire de différents niveaux de tension.

7. Procédé selon l'une quelconque des revendications précédentes,
**caractérisé en ce**
**qu'**une adaptation de valeur d'impulsion (S4) des signaux de quadrature est effectuée avant le transfert à l'unité d'envoi (110).

8. Procédé selon la revendication 7,
**caractérisé en ce**
**qu'**aux fins de l'adaptation de valeur d'impulsion, on accède à une base de données avec des valeurs de processus prédéfinies, de manière préférée une table de consultation, et les valeurs de correction pour les conditions de processus de mise à cet instant sont lues et une correction des signaux de quadrature est exécutée au moyen des valeurs de correction.

9. Dispositif de mesure du volume servant à mettre en oeuvre le procédé de mesure selon l'une quelconque des revendications précédentes,
**caractérisé en ce**
**qu'**un calculateur de processus programmable, à savoir un microcontrôleur, un ASIC (circuit intégré pour applications spécifiques), un FPAG (réseau de portes programmables *in situ*) et/ou un DSP (traitement de signaux numériques) avec au moins une interface encodeur en quadrature et/ou un compteur encodeur en quadrature (108) est prévu, dans lequel ledit ensemble met en oeuvre l'évaluation des signaux de mesure.

Fig. 1

EP 2 641 066 B1

Fig. 2

EP 2 641 066 B1

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005119185 A1